# EUROPEAN PATENT APPLICATION

(11) **EP 2 330 570 A1**
(43) Date of publication of application: **08.06.2011**
(21) Application number: 09824652.3
(22) Date of filing: 01.07.2009
(51) Int. Cl.: G07D 9/00, G07D 1/00

(54) **FRAUD SURVEILLANCE METHOD AND AUTOMATIC TELLER MACHINE HAVING FRAUD SURVEILLANCE FUNCTION**

(30) Priority: 10.11.2008 JP 2008287447
(71) Applicant: Oki Electric Industry Co., Ltd., Minato-ku Tokyo 105-8460 (JP)
(72) Inventor: IKEGAMI, Katsumi, Tokyo 105-8460 (JP)
(74) Representative: Betten & Resch
(86) International application number: PCT/JP2009/062041
(87) International publication number: WO 2010/052952

(57) **Abstract**

An automatic teller machine having a fraud surveillance function includes a camera for capturing an image of a subject to be monitored, the subject to be monitored being provided with unique ID information; a recording unit that records code information set in the unique ID information and positional information of the unique ID information; an identifying unit that identifies the unique ID information from the captured image of the subject to be monitored and acquires the code information, and that also specifies the position of the unique ID information and acquires the positional information; and a surveillance processing unit that regards the code information and the positional information of the unique ID information, both recorded in the recording unit, as recorded code information and recorded positional information, regards the code information and the positional information of the unique ID information, both acquired by the identifying unit, as acquired code information and acquired positional information, compares the recorded code information with the acquired code information and also compares the recorded positional information with the acquired positional information, thereby determining whether or not the fraud exists with respect to the subject to be monitored.

## Description

### Technical Field

The present invention relates to a fraud surveillance method that surveils fraud using a camera, and an automatic teller machine to which the method is applied.

### Related Art

In an automatic teller machine or other apparatuses, measures for preventing various kinds of fraud by a malicious person (hereinafter referred as an "unauthorized person") are taken.
For example, in the automatic teller machine, it is assumed that an unauthorized person destructs a service port shutter and removes bills inside the service port. As a measure for such fraud, in the automatic teller machine, a destruction detection sensor that detects a destructive act with respect to the service port shutter is provided inside a service port and a destructive act with respect to the service port shutter is detected by this sensor (for example, refer to Patent Document 1). Additionally, as another measure for such fraud, in the automatic teller machine, an opening and closing sensor that detects the opening and closing operation of the service port shutter is provided inside the service port and abnormality of the opening and closing operation of the service port shutter is detected by this sensor (for example, refer to Patent Document 2).
In the automatic teller machine, in a case in which the sensor detects a destructive act with respect to the service port shutter or abnormality of the opening and closing operation of the service port shutter, it is determined whether there is a possibility that fraud has been performed, and the bills inside the service port is taken into the inside of the machine. Thereby, the automatic teller machine prevents that an unauthorized person from removing bills inside the service port.
Patent Document 1: Japanese Patent Application Laid-Open (JP-A) No. 8-844935
Patent Document 2: JP-A No. 2008-97241

### Disclosure of the Invention

### Problem to be Solved by the Invention

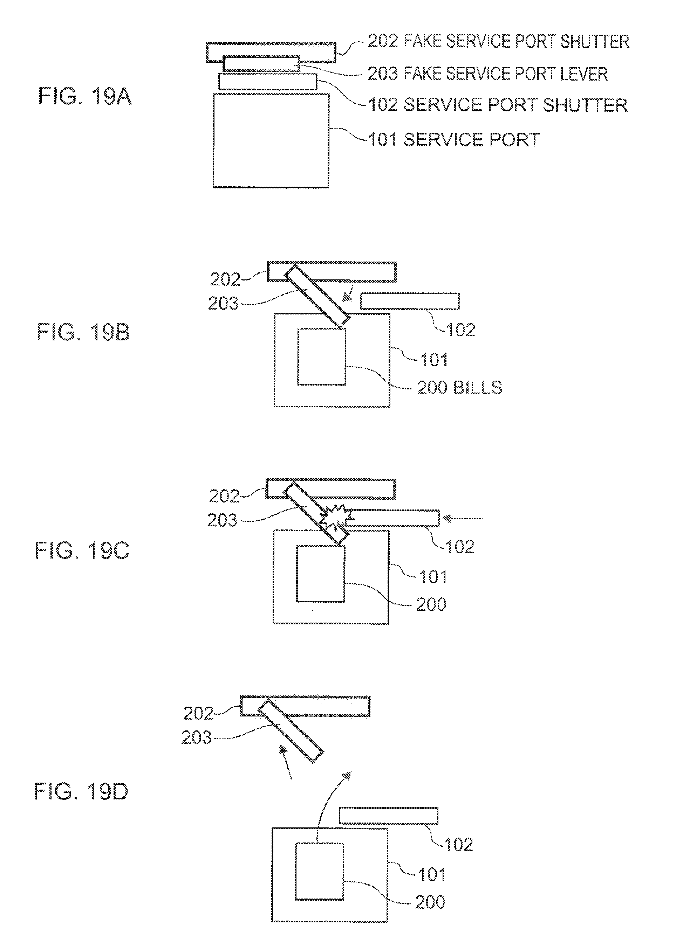

However, for example, using a fake service port shutter (hereinafter simply referred to as a "fake service port shutter") is used is assumed as the fraud with respect to the service port. An example of the fraud is shown in FIGS. 19A to 19D. In addition, FIGS. 19A to 19D are explanatory views of fraud using the fake service port shutter.

As shown in FIG. 19A, an unauthorized person attaches a fake service port shutter 202 onto the service port shutter 102 so as to cover the service port shutter 102. In the example shown in FIG. 19A, the fake service port shutter 202 has a configuration in which a fake service port lever 203 that turns in a downward direction (i.e., toward the service port shutter 102) due to its own weight is arranged on the bottom surface (the surface that faces the service port shutter 102) thereof. The fake service port shutter 202 has at least a configuration in which the outer appearance of a portion that is visually recognized from a user is similar to the service port shutter 102. Therefore, in a case in which a regular user of the automatic teller machine sees the fake service port shutter 202, the fake service port shutter 202 is mistaken for the genuine service port shutter 102.
Here, for example, it is assumed that the regular user manipulates the automatic teller machine to perform withdrawal processing in a place in which only one automatic teller machine is installed.
In this case, the automatic teller machine opens the service port shutter 102 in order to accumulate bills 200 inside a service port 101 and to pay out the bills 200.

At this time, as shown in FIG. 19B, the fake service port lever 203 turns in the downward direction due to its own weight, and enters the inside of the service port 101.
In addition, at this time, the fake service port shutter 202 itself does not perform opening operation. Therefore, as seen from the regular user, the service port shutter 102 is visible a state in which the shutter is not opened.

Since an operation time-out is reached (i.e., the time that is determined in advance for operation is exceeded) when a certain period of time has lapsed in the state shown in FIG. 19B, the automatic teller machine operates to close the service port shutter 102 so as to take the bills 200 accumulated in the service port 101 into the inside of the machine. However, at this time, as shown in FIG. 19C, the fake service port lever 203 that has entered the service port 101 interfere with closing of the service port shutter 102. Therefore, the automatic teller machine cannot close the service port shutter 102, and the bills 200 remain accumulated inside the service port 101. As a result, the automatic teller machine falls into an error state and stops processing of transactions (here, withdrawal processing).
At this time, the automatic teller machine displays an abnormal state message (message representing that transactions cannot be performed) on a display unit. Therefore, a regular user will be separated from the automatic teller machine.

When the regular user is separated from the automatic teller machine, as shown in FIG. 19D, an unauthorized person removes the fake service port shutter 202 from the service port shutter 102. Thereby, the unauthorized person removes the bills (hereinafter referred to as "regular user's bills") 200 that have been subjected to withdrawal processing by the regular user.

The conventional techniques disclosed in Patent Documents 1 and 2 cannot detect such fraud (i.e., the fraud of attaching a fake article to the machine). Therefore, there is a possibility that the unauthorized person performs such fraud to remove the regular user's bills 200. In addition, such fraud is not limited to the automatic teller machine, and may have been performed even in other apparatuses.

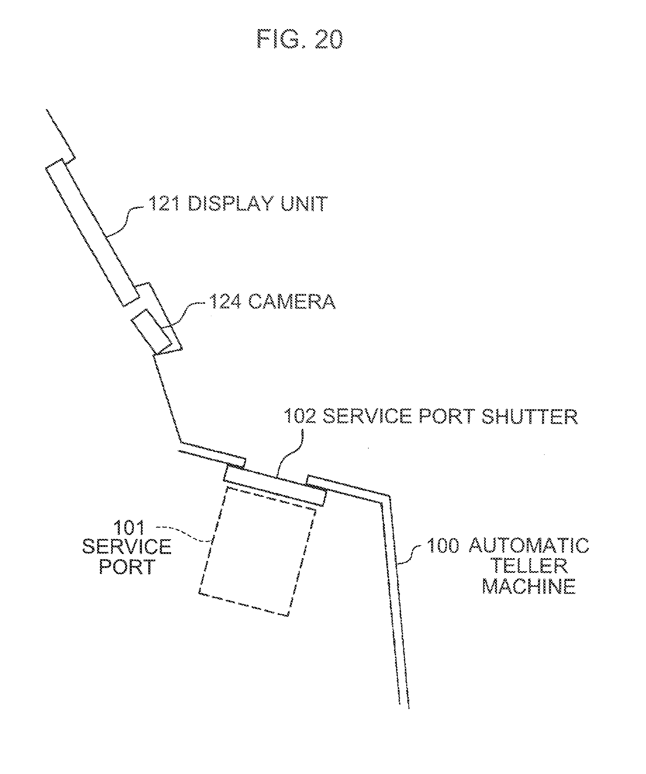

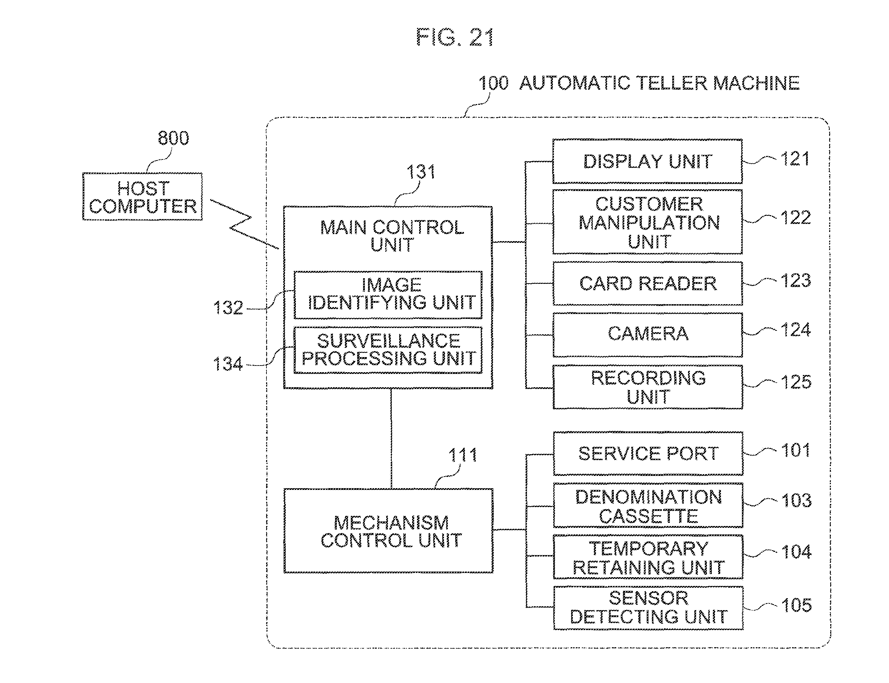

As a measure for such fraud, for example, there is technique of making the configuration of the automatic teller machine into a configuration shown in FIGS. 20 and 21. In addition, FIG. 20 is a block diagram of a conventional automatic teller machine. Additionally, FIG. 21 is a configuration block diagram of the machine.
As shown in FIG. 21, the automatic teller machine 100 has constituent elements, such as a camera 124, an image identifying unit 132, and a surveillance processing unit 134, in addition to well-known constituent elements, such as a service port 101, a denomination cassette 103, a temporary retaining unit 104, a sensor detecting unit 105, a mechanism control unit 111, a display unit 121, a customer manipulation unit 122, a card reader 123, a recording unit 125, and a main control unit 131. In addition, description of the well-known constituent elements, such as the service port 101, the denomination cassette 103, the temporary retaining unit 104, the sensor detecting unit 105, the mechanism control unit 111, the display unit 121, the customer manipulation unit 122, the card reader 123, the recording unit 125, and the main control unit 131, will be omitted herein.
The camera 124, as shown in FIG. 20, is a constituent element that captures an image of a subject to be monitored (here, the service port shutter 102).
The image identifying unit 132 and the surveillance processing unit 134 are the functional means that are constructed inside the main control unit 131 consisting of a CPU. The image identifying unit 132 identifies the subject to be monitored from the captured image captured by the camera 124. The surveillance processing unit 134 surveils against fraud with respect to the subject to be monitored, which is identified by the image identifying unit 132.
The automatic teller machine 100 detects a change in the captured image captured by the camera 124, thereby detecting fraud with respect to the subject to be monitored, in a case in which a fake article (here, the fake service port shutter 202) is attached to the top of the subject to be monitored (here, the service port shutter 102). In addition, in a case in which fraud with respect to the subject to be monitored is detected, the surveillance processing unit 134 stops processing of transactions, and notifies a host computer 800 via a network (not shown) that the automatic teller machine 100 is in an abnormal state.

However, in this technique, as the outer appearances (the outer appearances of at least the portions that are visually recognized form a user) of the genuine service port shutter 102 and the fake service port shutter 202 are similar to each other, the image identifying unit 133 needs to detect a minute change in the captured image. In a case in which the image identifying unit 132 is adjusted so that the minute change can be detected, the surveillance processing unit 134 often mistakes a change in environment light for attachment of the fake service port shutter 202. On the contrary, in a case in which the image identifying unit 132 is adjusted so that a change in environment light is not detected, the surveillance processing unit 134 can hardly detect attachment of the fake service port shutter 202.

As such, since the conventional techniques are influenced by the environment, light, there is a problem in that the subject to be monitored cannot be properly detected in a case in which the environment light has changed. Therefore, the surveillance of fraud with respect to the subject to be monitored functions satisfactorily, and the possibility that an unauthorized person removes regular user's bills remains still.
The main object of the invention is to solve the aforementioned problems and to provide a fraud surveillance method that can detect a subject to be monitored properly, and an automatic teller machine to which the method is applied, even if ambient light has changed.

### Method of Solving the Problem

In order to solve the above problems, a fraud surveillance method of the present invention uses a machine having a camera that captures an image of a subject to be monitored, an identifying unit that analyzes the image, a recording unit that stores various kinds of information, and a surveillance processing unit that surveils against fraud with respect to the subject to be monitored. The fraud surveillance method includes a recording step in which the surveillance processing unit records, in the recording unit, code information set in unique ID information that is provided in advance in the subject to be monitored in an image-capturable state, and positional information representing a position at which the unique ID information is provided; an image-capture step in which the camera captures an image of the subject to be monitored; a code information acquisition step in which the identifying unit identifies the unique ID information from the captured image of the subject to be monitored that is captured in the image-capture step, and acquires the code information of the unique ID information; a positional information acquisition step in which the identifying unit specifies the position at which the unique ID information is provided, and acquires the positional information of the unique ID information; and a comparison step in which the surveillance processing unit regards the code information and the positional information of the unique ID information, both recorded in the recording unit in the recording step, as recorded code information and recorded positional information, regards the code information and the positional information of the unique ID information, both acquired in the code information acquisition step and the positional information acquisition step, as acquired code information and acquired positional information, compares the recorded code information with the acquired code information, and compares the recorded positional information with the acquired positional information, thereby determining whether or not fraud exists with respect to the subject to be monitored.

Additionally, an automatic teller machine of the present invention having a fraud surveillance function includes: a camera that captures an image of a subject to be monitored, the subject to be monitored being provided in advance with unique ID information in an image-capturable state; a recording unit that records code information set in the unique ID information and positional information representing a position at which the unique ID information is provided; an identifying unit that identifies the unique ID information from the captured image of the subject to be monitored that is captured by the camera and acquires the code information, and that specifies the position at which the unique ID information is provided and acquires the positional information; and a surveillance processing unit that regards the code information and the positional information of the unique ID information, both recorded in the recording unit, as recorded code information and recorded positional information, regards the code information and the positional information of the unique ID information, both acquired by the identifying unit, as acquired code information and acquired positional information, compares the recorded code information with the acquired code information and compares the recorded positional information with the acquired positional information, thereby determining whether or not fraud exists with respect to the subject to be monitored.
The other means will be described below.

### Effect of the Invention

According to the invention, since the subject to be monitored can be surveilled without being influenced by ambient light, the subject to be monitored can be properly detected even if environment light has changed.

### Brief Description of the Drawings

FIG. 1 is a block diagram of a configuration of an automatic teller machine related to Embodiment 1.
FIG. 2 is an explanatory view of a mark related to Embodiment 1, showing an example of a captured image of a service port shutter.
FIG. 3A is an explanatory view of the mark related to Embodiment 1, showing an example in which the mark is enlarged.
FIG. 3B is an explanatory view of the mark related to Embodiment 1, showing an example of the code information of the mark.
FIG. 3C is an explanatory view of the mark related to Embodiment 1, showing an example of mark information.
FIG. 4A is an explanatory view of the mark related to Embodiment 1, showing the position of the mark in the captured image.
FIG. 4B is an explanatory view of the mark related to Embodiment 1, showing the positional information of the mark.
FIG. 5 is a flow chart showing the operation of the automatic teller machine related to Embodiment 1, showing a processing process before the start of operation.
FIG. 6 is a flow chart showing the operation of the automatic teller machine related to Embodiment 1, showing a processing process after the start of operation.
FIG. 7 is a flow chart showing the operation of the automatic teller machine related to Embodiment 1, showing a processing process after the start of operation.
FIG. 8 is an explanatory view of an alarm message.
FIG. 9 is an explanatory view of an abnormal state message.
FIG. 10 is a block diagram of a configuration of an automatic teller machine related to Embodiment 2.
FIG. 11 is an explanatory view of a mark related to Embodiment 2, showing an example of a captured image of a service port shutter.
FIG. 12 is an explanatory view of the mark related to Embodiment 2, showing the position, the size, and inclination angle of individual marks in the captured image.
FIG. 13 is an explanatory view of the mark related to Embodiment 2, showing an example of mark information.
FIG. 14 is a flow chart showing the operation of the automatic teller machine related to Embodiment 2, showing a processing process before the start of operation.
FIG. 15 is a flow chart showing the operation of the automatic teller machine related to Embodiment 2, showing a processing process after the start of operation.
FIG. 16 is a flow chart showing the operation of the automatic teller machine related to Embodiment 2, showing a processing process after the start of operation.
FIG. 17 is a flow chart showing the operation of the automatic teller machine related to Embodiment 2, showing a processing process after the start of operation.
FIG. 18 is a view showing an example in which a fraud surveillance method of the invention is used for an input device.
FIG. 19A is an explanatory view of fraud using a fake service port shutter.
FIG. 19B is an explanatory view of fraud using a fake service port shutter.
FIG. 19C is an explanatory view of fraud using a fake service port shutter.
FIG. 19D is an explanatory view of fraud using a fake service port shutter.
FIG. 20 is a block diagram of a conventional automatic teller machine.
FIG. 21 is a block diagram of a conventional automatic teller machine.

### Best Mode of Implementing the invention

Embodiments (hereinafter referred to as the "present embodiment") of the invention will now be described below in detail with reference to the drawings. In addition, the respective drawings merely show the shape, size, and arrangement relationship of respective constituent elements schematically to such a degree that the invention can be understood. Hence, the invention is not limited only to illustrated examples. Additionally, in the respective drawings, common constituent elements or similar constituent elements will be designated by the same reference numerals, and duplicate description thereof will be omitted.

### [Embodiment 1]

### <configuration of automatic teller machine>

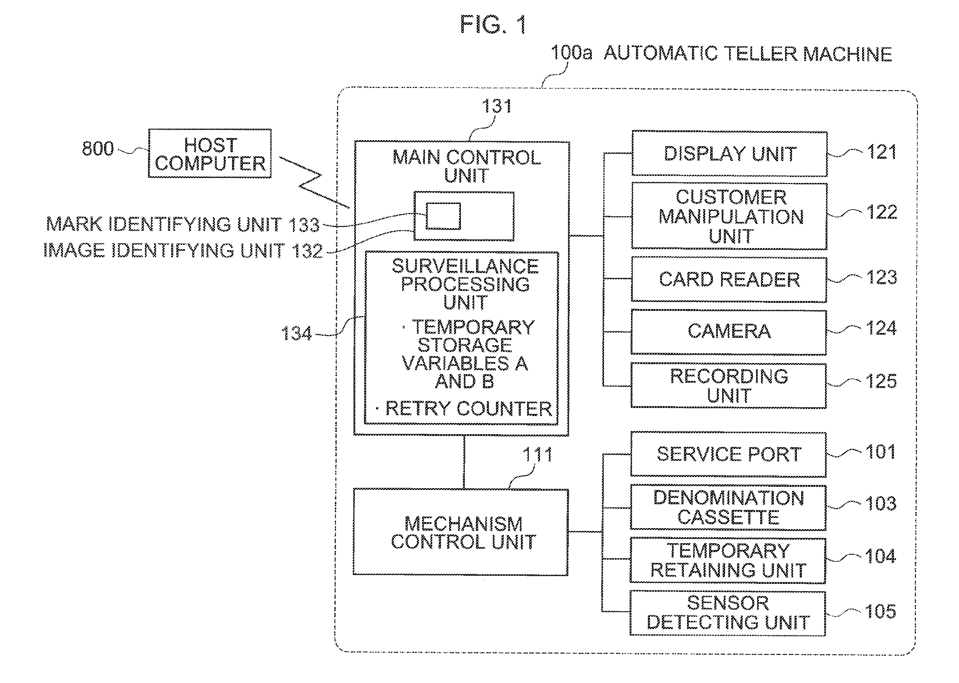

The configuration of the automatic teller machine related to the present embodiment 1 will now be described below with reference to FIG. 1. In addition, FIG. 1 is a block diagram of the configuration of the automatic teller machine related to the present embodiment 1. Here, the same constituent elements (refer to FIGS. 19A to 21) as the conventional technique will be designated by the same reference numerals, and description thereof will be omitted.

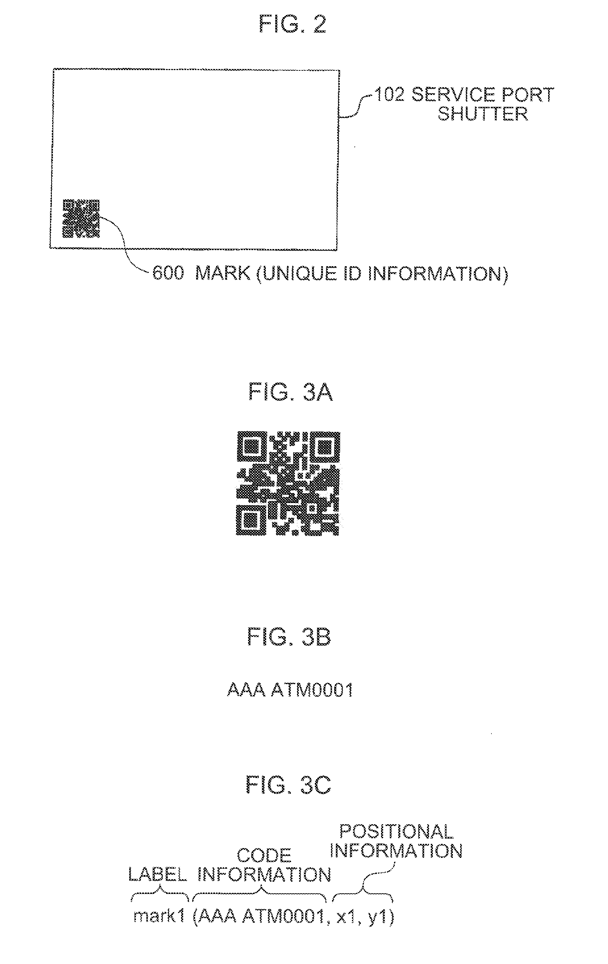

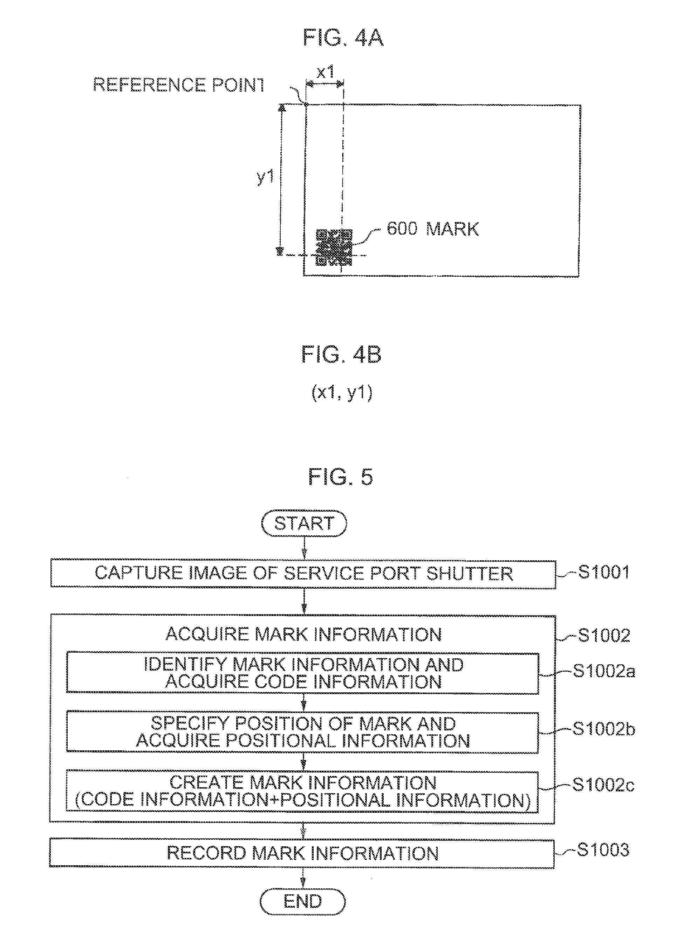

As shown in FIG. 1, the automatic teller machine 100a related to the present embodiment 1 is different from the automatic teller machine 100 (refer to FIG. 21) of the conventional technique in that an image identifying unit 132 is equipped with a mark identifying unit 133. The mark identifying unit 133 is a functional means that identifies a mark 600 as will be described below with reference to FIG. 2 to FIGS. 4 and 4B. In addition, FIG. 2 to FIGS. 4 and 4B are explanatory views of the mark 600, respectively.

The automatic teller machine 100 of the conventional technique has only the function to detect change of a captured image because the image identifying unit 132 is not equipped with the mark identifying unit 133. On the other hand, the automatic teller machine 100a related to the present embodiment 1 also has the function to identify the mark 600 from a captured image in addition to the function to detect change of the captured image because the image identifying unit 132 is equipped with the mark identifying unit 133. The mark identifying unit 133 will now be described below in detail.

The mark identifying unit 133 detects the mark 600 (refer to FIG. 3 A) from a captured image (refer to FIG. 2) of a service port shutter 102 captured by a camera 124. In addition, FIG. 2 shows an example of the captured image of the service port shutter 102. Additionally, FIG. 3A shows an example in which the mark 600 is enlarged. The mark 600 represents ID information (hereinafter simply referred to as "unique ID information") unique to each machine. The mark 600 is an image that can be identified by a computer and that includes unique information between machines. In the present embodiment, the mark 600 is constituted as a two-dimensional bar code. The mark 600 is provided at a subject to be monitored (here, the service port shutter 102) by a technique, such as seal sticking, ink application, or embossing.

When the mark 600 is detected, the mark identifying unit 133 performs identification processing of the detected mark 600 in response to this, and identifies code information (refer to FIG. 3B) set in the mark 600. Thereby, the mark identifying unit 133 acquires code information of the mark 600. In addition, FIG. 3B shows an example of the code information of the mark 600.

When the code information of the mark 600 is acquired, the mark identifying unit 133 specifies the position (refer to FIG. 4A) of the mark 600 in the captured image in response to this to acquire positional information of the mark 600 (refer to FIG. 4B). In addition, FIG. 4A shows the position of the mark 600 in the captured image. In the example shown in FIG. 4A, the mark 600 is provided at a position of distance x1 in an X-axis direction and distance y1 in a Y-axis direction with reference to a predetermined reference point O. Additionally, FIG. 4A shows the positional information of the mark 600. In the example shown in FIG. 4B, the positional information of the mark 600 becomes (x1, y1).
The code information and positional information of the mark 600 are used as a variable (hereinafter simply referred as a "temporary storage variable") temporarily stored within a surveillance processing unit 134, and are stored as information (hereinafter referred to as "mark information") representing the details of the mark 600 in a recording unit 125. FIG. 3C shows an example of the mark information. In the example shown in FIG. 3C, the mark information includes label information of "mark1", the code information of "AAA ATM0001", and the positional information of "x1, y1".

### <Operation of automatic teller machine>

The operation of the automatic teller machine 100a related to the present embodiment 1 will now be described below with reference to FIGS. 5 to 7. In addition, FIGS. 5 to 7 are flow charts showing the operation of the automatic teller machine 100a related to the present embodiment 1, respectively.
In addition, a case in which a user manipulates the automatic teller machine 100a to perform withdrawal processing will be described herein. Additionally, although a case in which the camera 124 is built in the automatic teller machine 100a is described herein, the camera may be provided outside the automatic teller machine 100a as long as the camera is at a position at which the mark 600 of the service port shutter 102 can be captured. Hereinafter, the outline of the operation will first be descried, and the details of the operation will then be described.

### <Outline of operation>

The automatic teller machine 100a performs recording processing of mark information as processing before the start of operation. That is, the automatic teller machine 100a captures an image of a subject to be monitored (service port shutter 102) by the camera 124, and mark information (refer to FIG. 3C) is acquired by the mark identifying unit 133 to store (record) the mark information in the recording unit 125. In addition, the operation of saving the information that becomes the reference of determination processing in the recording unit 125 is herein referred to as "recording".

Thereafter, the automatic teller machine 100a performs the following first and second processing as processing after the start of operation.
That is, the automatic teller machine 100a, as first processing, performs identification processing of the mark 600 provided at the subject to be monitored (service port shutter 102), and detects abnormality of the subject to be monitored on the basis of the mark information (hereinafter referred to as "acquired mark information") acquired by this. Here, if a fake article (fake service port shutter 202) are attached onto the subject to be monitored (service port shutter 102), the acquired mark information no longer coincide with the mark information (hereinafter referred to as "recorded mark information") temporarily recorded in the recording unit 125. This is because a phenomenon in which the mark 600 cannot be detected, a phenomenon in which the code information of the mark 600 differs, or a phenomenon in which the positional information of the mark 600 differs occurs. Accordingly, the automatic teller machine 100a can detect abnormality of the subject to be monitored, using a difference between the acquired mark information and the recorded mark information.
Additionally, the automatic teller machine 100a, as second processing, moves the subject to be monitored (service port shutter 102) by an intended distance to perform identification processing of the mark 600, and detects abnormality of the subject to be monitored on the basis of the acquired mark information acquired by this. Here, if the moved acquired mark information does not coincide with the mark information (i.e., the "moved recorded mark information" as will be described below) anticipated from the recorded mark information, abnormality of the subject to be monitored is presumed. For example, in a case in which the subject to be monitored is faked including mark information, abnormality of the subject to be monitored may be unable to be detected in the first above mentioned processing. However, since a fake article (fake service port shutter 202) is manufactured in a state in which a genuine article (service port shutter 102) cannot expect that the article moves by an intended distance, movement operation of a genuine article cannot be imitated. Therefore, the acquired moved mark information no longer coincides with the mark information anticipated from the recorded mark information. In a case in which the acquired moved mark information does not coincide with the mark information anticipated from the recorded mark information due to such a reason, abnormality of the subject to be monitored is presumed. Accordingly, the automatic teller machine 100a can improve the detection precision of abnormality of the subject to be monitored, using a difference between the acquired mark information and the recorded moved mark information.

### <Details of operation>

### (1. Processing before start of operation)

The automatic teller machine 100a performs recording processing of mark information as processing before the start of operation. A processing process before the start of operation is shown in FIG. 5.
As shown in FIG. 5, the camera 124 of the automatic teller machine 100a first captures an image of the service port shutter 102 (S1001), and the mark identifying unit 133 then acquires mark information corresponding to the mark 600 (S1002).
In addition, acquisition of the mark information of S1002 is performed as the mark identifying unit 133 operates as follows. That is, the mark identifying unit 133 detects a mark 600 from a captured image of a subject to be monitored (service port shutter 102) captured by the camera 124 in S1001, thereby performing identification processing of the detected mark 600, and identifies code information (refer to FIG. 3B) set in the mark 600. Thereby, the mark identifying unit 133 acquires code information of the mark 600 (S1002a). Next, the mark identifying unit 133 specifies the position of the mark 600 in the captured image to acquire the positional information of the mark 600 (refer to FIG. 4B) (S1002b). Next, the mark identifying unit 133 combines the code information with the positional information to create mark information (refer to FIG. 3C) corresponding to the mark 600 (S1002c). Thereby, the mark identifying unit 133 acquires the mark information corresponding to the mark 600 (S1002).
When the mark identifying unit 133 acquires the mark information, the mark information acquired by the mark identifying unit 133 (or surveillance processing unit 134) is recorded in the recording unit 125 in response to this (S1003). Thereby, the processing before the start of operation is completed.

### (2. Processing after start of operation)

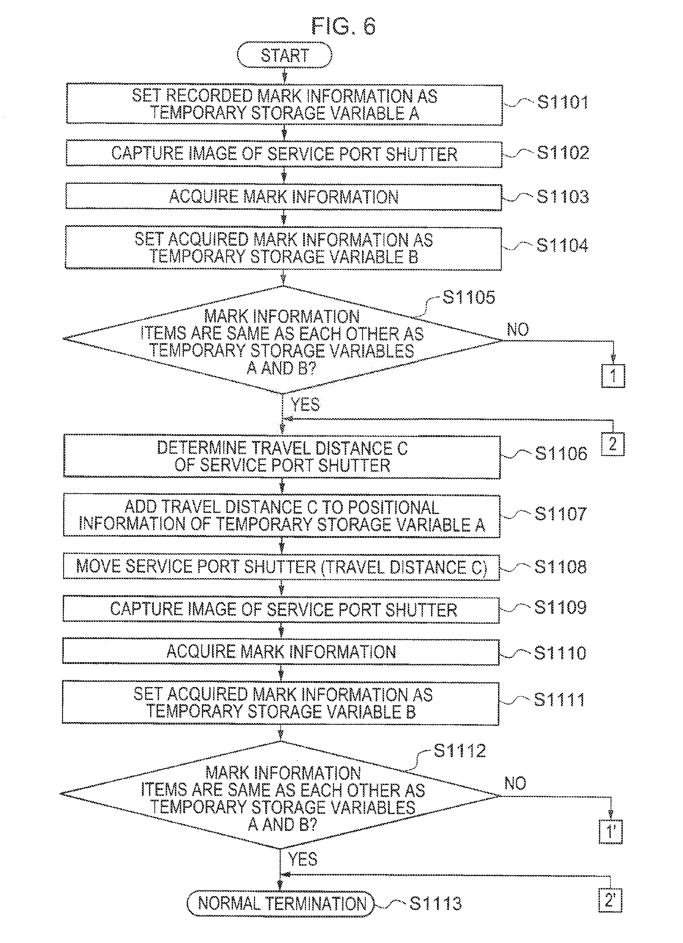

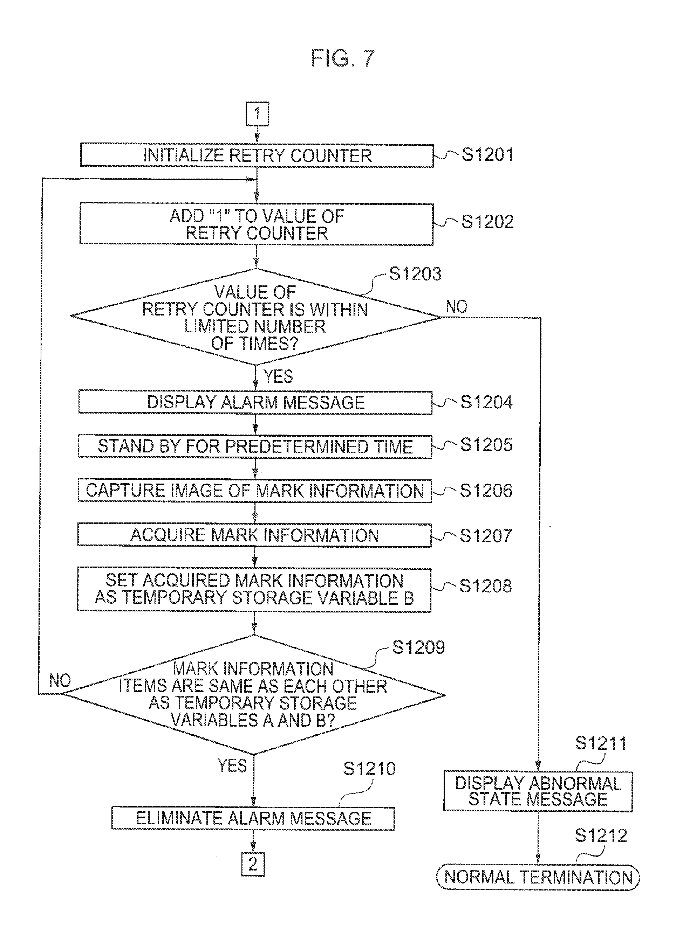

The automatic teller machine 100a performs surveillance processing for fraud (here, the fraud of attaching a fake article (fake service port shutter 202) onto a genuine article (service port shutter 102)) with respect to a subject to be monitored as processing after the start of operation. A processing process after the start of operation is shown in FIGS. 6 and 7. The flow of surveillance processing is roughly classified as (1) the normal state processing, (2) the abnormal state processing resulting from negligent act, and (3) the abnormal state processing resulting from intentional act. The "negligent, act" is, for example, an act whereby a regular user places a foreign object at the periphery of the service port shutter 102. The "intentional act" is, for example, an act that an unauthorized person attaches a fake article (fake service port shutter 202) to a genuine article (service port shutter 102). Respective processing steps will now be described below in order.

As shown in FIG. 6, the surveillance processing unit 134 of automatic teller machine 100a first reads the mark information (recorded mark information) recorded in S1003 (refer to FIG. 5) from the recording unit 125, and sets the recorded mark information as a temporary storage variable A in the surveillance processing unit 134 (S1101).
When the surveillance processing unit 134 sets the recorded mark information as the temporary storage variable A, the camera 124 captures an image of the service port shutter 102 in response to this (S1102).
When the camera 124 captures the image of the service port shutter 102, in response to this, the mark identifying unit 133 acquires mark information corresponding to the mark 600 from the captured image of the service port shutter 102 according to the same procedure as in S1003 (refer to FIG. 5) (S1103). When the mark identifying unit 133 acquires the mark information, the mark identifying unit 133 (or surveillance processing unit 134) sets the acquired mark information (acquired mark information) as a temporary storage variable B within the surveillance processing unit 134 in response to this (S1104).
When the mark identifying unit 133 (or surveillance processing unit 134) sets the acquired mark information as the temporary storage variable B, the surveillance processing unit 134 compares the recorded mark information set as the temporary storage variable A with the acquired mark information set as the temporary storage variable B in response to this, and determines whether or not the mark information set as the temporary storage variable A and the mark information set as the temporary storage variable B are the same as each other (S1105).

After the determination in S1105, the operation of the automatic teller machine 100a branches to a case in which the mark information set as the temporary storage variable A and the mark information set as the temporary storage variable B are the same as each other (normal state processing) or a case in which they are different from each other (abnormal state processing). If the mark information items are the same as each other ("Yes" in S1105), the process proceeds to S1106. If the mark information items are different from each other ("No" in S1105), the process proceeds to S1201 (refer to Fig. 7). The respective processsings will now be described below.

### (2a. Normal state processing)

If the mark information items are the same as each other in the determination of S1105b ("Yes" in S1105), the surveillance processing unit 134 determines the travel distance C of the service port shutter 102 (S1106). The travel distance C is a value for moving the service port shutter 102 by an intended distance, The surveillance processing unit 134 determines the travel distance C in line with the following conditions.
(1) The travel distance C is a value that is sufficiently large to the extent that movement of the service port shutter 102 can be detected in the subsequent processing.
(2) The travel distance C should be a value within a range in which bills 200 accumulated inside the service port 101 are invisible through a gap in the service port shutter 102 after movement.
(3) The travel distance C should be a value determined at random in each processing.
When the travel distance C is determined in line with these conditions, the surveillance processing unit 134 adds the travel distance C to the positional information of the recorded mark information set as the temporary storage variable A in response to this (S1107). Thereby, the recorded mark information set as the temporary storage variable A is updated by the mark information corresponding to the mark 600 (hereinafter referred to as the "moved mark 600") after the service port shutter 102 has moved. Hereinafter, the updated mark information is referred to as the "recorded moved mark information". This "recorded moved mark information" means the aforementioned "mark information anticipated from recorded mark information".
If the travel distance C is added, the surveillance processing unit 134 moves the service port shutter 102 by the travel distance C in response to this (S1108).

Hereinafter, the automatic teller machine 100a performs the same processings as in S1102 to S1105 (S1109 to S1112). That is, the camera 124 captures an image of the service port shutter 102 (S1109), the mark identifying unit 133 acquires the mark information (hereinafter referred to the "acquired moved mark information") corresponding to the moved mark 600 according to the same procedure as in S1003 (S1110), and the mark identifying unit 133 (or surveillance processing unit 134) sets the acquired moved mark information as the temporary storage variable B within the surveillance processing unit 134 (S1111). Then, the surveillance processing unit 134 compares the recorded moved mark information set as the temporary storage variable A with the acquired moved mark information set as the temporary storage variable B, and determines whether or not the mark information set as the temporary storage variable A and the mark information set as the temporary storage variable B are the same as each other (S1112).

If the mark information set as the temporary storage variable A and the mark information set as the temporary storage variable B are the same as each other in the determination of S1112 ("Yes" in S1112), the surveillance processing unit 134 regards fraud as not existing with respect to the subject to be monitored (service port shutter 102), and terminates (normal termination) the surveillance processing for fraud with respect to the subject to be monitored (S1113). Thereafter, the main control unit 131 of automatic teller machine 100a performs a desired processing (for example, processing, such as ejection of bills).
In addition, if the mark information set as the temporary storage variable A and the mark information set as the temporary storage variable B are different from each other in the determination of S1112 ("No" in S1112), the automatic teller machine 100a performs the same processing as in S1201 to S1212 shown in FIG. 7. In this processing, there are cases in which the processing of S1210 described below is performed and cases in which the processing of S1212 described below is performed. In a case in which the processing S1210 described below is performed, the process proceeds to S1113 after S1210. In this case, in S1113, the surveillance processing unit 134 regards fraud as not existing with respect to the subject to be monitored, and terminates (normal termination) the surveillance processing for fraud with respect to the subject to be monitored. On the other hand, if the processing of S1212 described below is performed, in S1212, the surveillance processing unit 134 regards fraud as existing with respect to the subject to be monitored, and terminates (abnormal termination) the surveillance processing for fraud with respect to the subject to be monitored.

### (2b. Abnormal state processing)

If the mark information items are different from each other in the determination of S1105 ("No" in S1105), it is presumed that there is an abnormality in the subject to be monitored (service port shutter 102). The abnormal state processing is classified as abnormal state processing resulting from a negligent act, or abnormal state processing resulting from an intentional act. A negligent act is, for example, an act whereby a regular user places a foreign object at the periphery of the service port shutter as mentioned above. In this case, a user is urged to remove the foreign object, and when the foreign object is removed, normal state processing is performed. On the other hand, an intentional act is, for example, an act whereby an unauthorized person attaches a fake service port shutter to the service port shutter as mentioned above. In this case, the surveillance processing for fraud with respect to the subject to be monitored is repeatedly performed, and when the number of times of retry exceeds a limited number of times that is set in advance, fraud is regarded as existing with respect to the subject to be monitored, and the surveillance processing for fraud with respect to the subject to be monitored is terminated (abnormal termination). The abnormal state processing resulting from a negligent act and the abnormal state processing resulting from an intentional act will now be described below in order. In addition, if the mark information items are different from each other in the determination of S1112 ("No" in S1112), the same processing is performed, but detailed explanation thereof is omitted herein.

### (2b-1. Abnormal state processing resulting from negligent act)

If the mark information items are different from each other in the determination of S1105 ("No" in S1105), as shown in FIG. 7, the surveillance processing unit 134 initializes a retry counter inside the surveillance processing unit 134 (S1201). In addition, the retry counter is a counter that counts the number of times which the processing of S1202 to S1209 described below has been repeated.
If the retry counter is initialized, the surveillance processing unit 134 adds "1" to the value of the retry counter in response to this (S1202), and determines whether or not the value (i.e., the number of times which the processing of S1202 to S1209 has been repeated) of the retry counter is within a limited number of times (S1203),

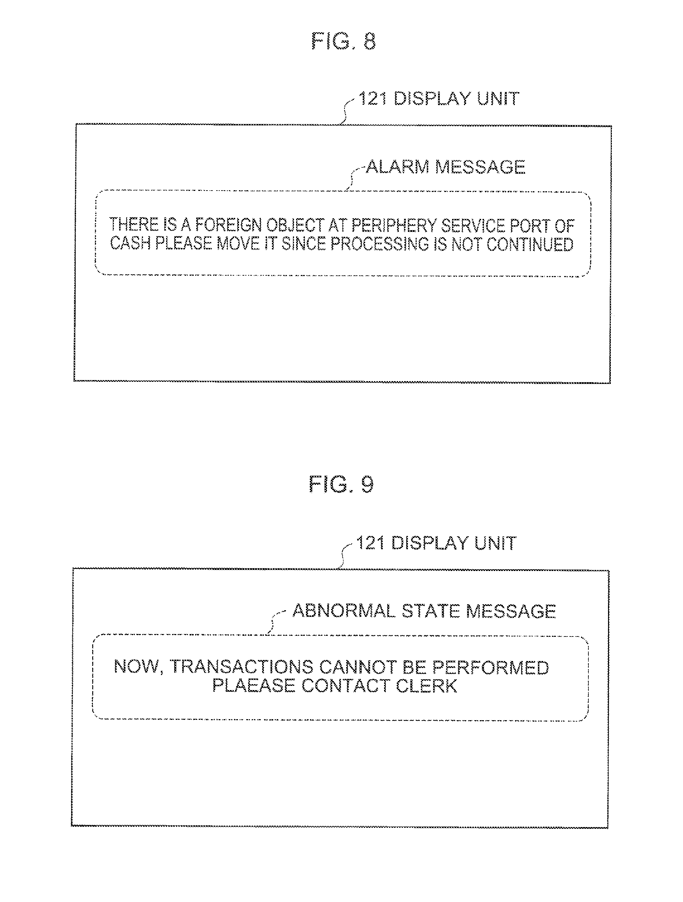

If the value of the retry counter is within a limited number of times in the determination of S1203 ("Yes" in S1203), the surveillance processing unit 134 displays a message (refer to FIG. 8) inviting a user's attention at the display unit 121 (S1204). Hereinafter, this message is referred to as an "alarm message". An example of display of the alarm message is shown in FIG. 8, In addition, FIG. 8 is an explanatory view of the alarm message. Here, the alarm message provides an instruction urging a user to remove a foreign object placed at the periphery of the service port 101.

After S1204, the surveillance processing unit stands by for a predetermined time (S1205), and then performs the same processing as in S1102 to S1105 (S1206 to S1209). That is, the camera 124 captures an image of the service port shutter 102 (S1206), the mark identifying unit 133 acquires the mark information ("acquired mark information) corresponding to the mark 600 according to the same procedure as in S1003 (S1207), and the mark identifying unit 133 (or surveillance processing unit 134) sets the acquired moved mark information as the temporary storage variable B within the surveillance, processing unit 134 (S1208). Then, the surveillance processing unit 134 compares the recorded mark information set as the temporary storage variable A with the acquired mark information set as the temporary storage variable B, and determines whether or not the mark information set as the temporary storage variable A and the mark information set as the temporary storage variable B are the same as each other (S1209).

Here, in a case in which a user has removed a foreign object, the mark information set as the temporary storage variable A and the mark information set as the temporary storage variable B become the same as each other. In this case, the surveillance processing unit 134 returns the processing to normal state processing, Accordingly, when the mark information set as the temporary storage variable A and the mark information set as the temporary storage variable B in the determination of S1209 are the same as each other ("Yes" in S1209), the surveillance processing unit 134 eliminates the alarm message displayed at the display unit in S1204 (S1210). Thereafter, the process proceeds to S1106 (refer to FIG. 6).
On the other hand, in a case in which a user does not remove a foreign object, the mark information set as the temporary storage variable A and the mark information set as the temporary storage variable B remain different from each other. In this case, the surveillance processing unit 134 repeatedly performs the abnormal state processing. Accordingly, if the mark information set as the temporary storage variable A and the mark information set as the temporary storage variable B in the determination of S1209 are different from each other, the process returns to S1202 ("No" in S1209). In this case, the automatic teller machine 100a repeats the processing of S1202 to S1209.

### (2b-2. Abnormal state processing resulting from intentional act)

If a user does not remove a foreign object within a limited number of times, the surveillance processing unit 134 regards fraud as existing with respect to the subject to be monitored, and terminates (abnormal termination) the surveillance processing for fraud with respect to the subject to be monitored. Accordingly, if the value of the retry counter is greater than a limited number of times in the determination of S1203 ("No" in S1203), the surveillance processing unit 134 displays a message (refer to FIG. 9) notifying a user that an abnormal state has occurred, at the display unit 121 (S1211). Hereinafter, this message is referred to as an "abnormal state message". An example of display of the abnormal state message is shown in FIG. 9. In addition, FIG. 9 is an explanatory view of the abnormal state message. Here, the abnormal state message notifies a user that the automatic teller machine 100a is in an abnormal state and processing of transactions cannot be continued.

After S1211, the surveillance processing unit 134 regards fraud as existing with respect to the subject to be monitored, and terminates (abnormal termination) the surveillance processing for fraud with respect to the subject to be monitored (S1212). In addition, in the case of abnormal termination, the surveillance processing unit 134 stops processing of transactions until a maintenance person for the automatic teller machine 100a performs maintenance. Additionally, at this time, the surveillance processing unit 134 may notify a host computer 800 that the automatic teller machine 100a is in an abnormal state.

In addition, in the present embodiment 1, the service port shutter 102 is moved only once. However, attachment of the fake service port shutter 202 can be made more difficult by performing back-and-forth movement multiple times.

As described above, according to the automatic teller machine 100a, a subject to be monitored is surveilled by providing the subject to be monitored (service port shutter 102) with fixed ID information (mark 600) that can be identified by a computer, acquiring the code information and positional information of the unique ID information from a captured image of the subject to be monitored, comparing the code information (recorded code information) recorded in the recording unit 125 with the acquired code information (acquired code information), and comparing the positional information (recorded positional information) recorded in the recording unit 125 with the acquired positional information (acquired positional information). Therefore, the subject to be monitored can be surveilled without being influenced by ambient light. Accordingly, even if ambient light changes, the subject to be monitored can be properly detected. Therefore, the surveillance against fraud with respect to the subject to be monitored functions satisfactorily, and the possibility of an unauthorized person removing a regular user's bills can be negated. Hence, fraud in which a fake article is attached to a subject to be monitored can be effectively prevented.
Additionally, according to the automatic teller machine 100a, the subject to be monitored is surveilled by moving the subject to be monitored by an intended travel distance C, and then by comparing the recorded moved code information with the acquired moved code information and comparing the recorded moved positional information with the acquired moved positional information. This can improve the detection precision of abnormality in the subject to be monitored. Hence, fraud in which a fake article is attached to the subject to be monitored can be more effectively prevented.

### [Embodiment 2]

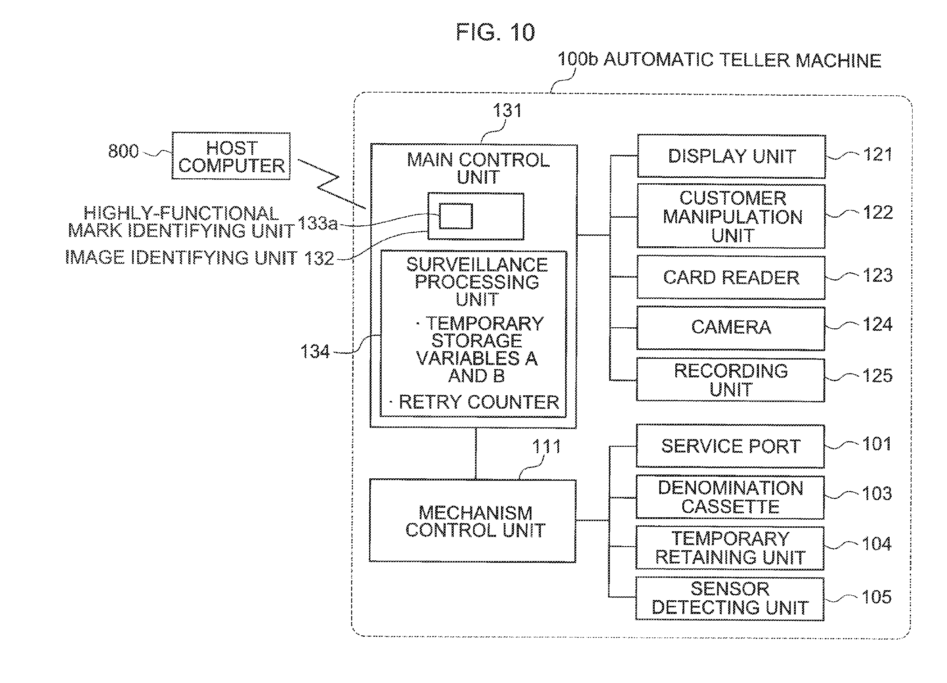

The configuration of the automatic teller machine related to the present embodiment 2 will now be described below with reference to FIG. 10. In addition, FIG. 10 is a block diagram of the configuration of the automatic teller machine related to the present embodiment 2.
As shown in FIG. 10, the automatic teller machine 100b related to the present embodiment 2 is different from the automatic teller machine 100a (refer to FIG. 1) related to the present embodiment 1 in that a highly-functional mark identifying unit 133a is provided instead of the mark identifying unit 133. The highly-functional mark identifying unit 133a is a functional means obtained by making the mark identifying unit 133 more highly functional,
The function that acquires the size information and inclination angle information (hereinafter simply referred to as "angle information") of the mark 600 in addition to the function that acquires the code information and positional information of the mark 600 similar to the mark identifying unit 133 is added to the highly-functional mark identifying unit 133a. Additionally, the function that detects plural marks 600 is also added to the highly-functional mark identifying unit 133a. The highly-functional mark identifying unit 133a acquires the code information, the positional information, the size information, and the angle information with respect to each of the plural marks 600.

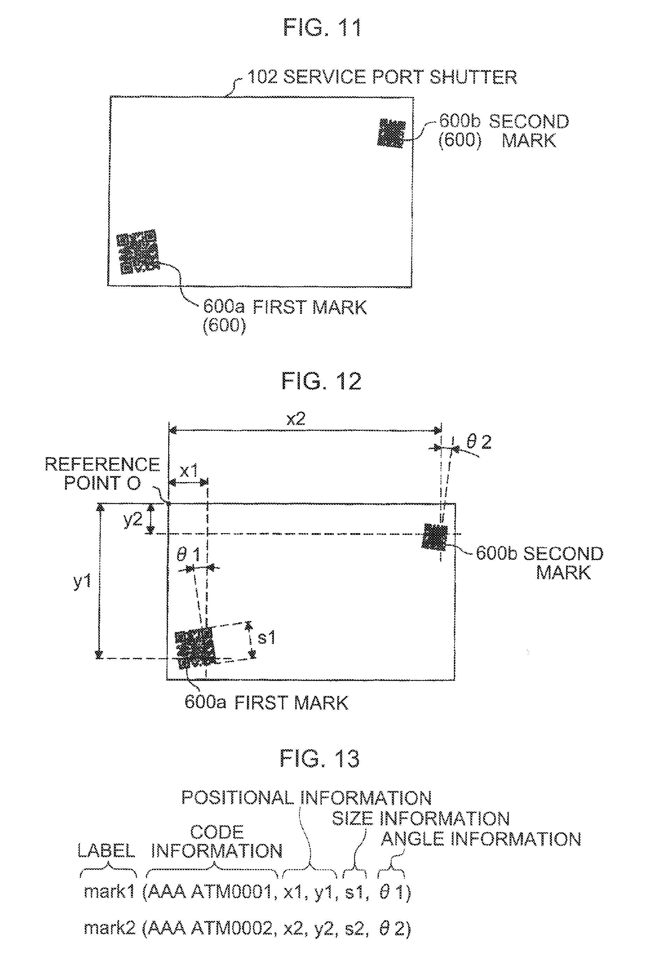

The highly-functional mark identifying unit 133a will now be described below with reference to FIGS. 11 to 13. In addition, FIGS. 11 to 13 are explanatory views of the marks 600, respectively.
In the present embodiment 2, the subject to be monitored (service port shutter 102) is provided with plural marks 600 (refer to FIG. 11). In addition, FIG. 11 shows an example of a captured image of the service port shutter 102. In the example shown in FIG. 11, a first mark 600a and a second mark 600b are provided as the plural marks 600. The plural marks 600 have code information that is unique thereto, respectively. Additionally, the plural marks 600 are different from each other in size or inclination angle, respectively. The plural marks 600 may be preferably constituted by a re-pasting unauthorized use preventing seal. Thereby, the plural marks 600 can be provided with different positions and different inclinations in each automatic teller machine 100b as a maintenance person or the like pastes the marks with his/her hand,

The highly-functional mark identifying unit 133a detects the plural marks 600 from the captured image of the service port shutter 102 captured by a camera 124.
When the plural marks 600 are detected, the highly-functional mark identifying unit 133a performs identification processing of the detected respective marks 600 in response to this, and identifies code information set in the respective marks 600. Thereby, the mark identifying unit 133 acquires the code information of the respective marks 600.

When the code information of the respective marks 600 is acquired, the mark identifying unit 133 specifies the position (refer to FIG. 12) of the respective marks 600 in the captured image in response to this to acquire positional information, size information, and angle information of the respective marks 600. In addition, FIG. 12 shows the position, size, and inclination angle of the respective marks 600 in the captured image. In the example shown in FIG. 12, the first mark 600a is provided at a position of distance x1 in an X-axis direction and distance y1 in a Y-axis Direction with reference to a reference point O. Additionally, the first mark 600a has a square shape, and the size of one side thereof has becomes s1. Additionally, the first mark 600a has an inclination angle of θ1 with respect to the Y-axis. On the other hand, the second mark 600b is provided at a position of distance x2 in the X-axis direction and distance y2 in the Y-axis direction with reference to the reference point O. Additionally, the second mark 600b has a square shape, and the size of one side thereof has becomes s2. Additionally, the second mark 600b has an inclination angle of θ2 with respect to the Y-axis.
The code information, positional information, size information, and angle information of the respective marks 600 are used as temporary storage variables within the surveillance processing unit 134, and are stored as mark information corresponding to the marks 600 in the recording unit 125. FIG. 13 shows an example of the mark information. In the example shown in FIG. 13, the mark information corresponding to the first mark 600a includes label information of "mark1", the code information of "AAAATM0001", the positional information of "x1, y1", the size information of "s1" and the angle information of "θ1". Additionally, the mark information corresponding to the second mark 600b includes label information of "mark2", the code information of "AAAATM0002", the positional information of "x2, y2", the size information of "s2" and the angle information of "θ2".

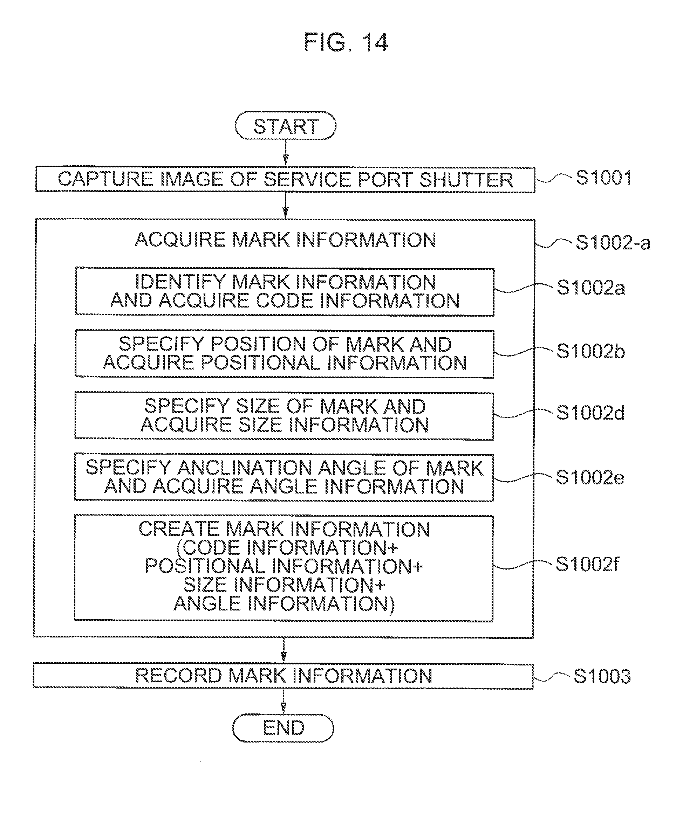

The operation of the automatic teller machine 100b related to the present embodiment 2 will now be described below with reference to FIGS. 14 to 17. In addition, FIGS. 14 to 17 are now charts showing the operation of the automatic teller machine 100b related to the present embodiment 2, respectively.
Here, as compared to the operation (refer to FIGS. 5 to 7) of the automatic teller machine 100a of Embodiment 1, different steps will be designated by "-a" and the different steps will be described intensively. Description of the same steps as the automatic teller machine 100a of Embodiment 1 will be omitted,
FIG. 14 shows a processing process before the start of operation. As shown in FIG. 14, the operation of the automatic teller machine 100b of the present embodiment 2 is different from the operation of the automatic teller machine 100a of Embodiment 1 in S1002-a ("mark information acquisition" process).
That is, in S1002-a, the highly-functional mark identifying unit 133a detects plural marks 600 from a captured image of a subject to be monitored (service port shutter 102) captured by the camera 124 in S1001, thereby performing identification processing of the respective detected marks 600, and identifies the code information set in the respective marks 600 to acquire the code information of the respective marks 600 (S1002a). Next the highly-functional mark identifying unit 133a specifies the position of the respective marks 600 in the captured images to acquire the positional information of the respective marks 600 (S1002b). Next, the highly-functional mark identifying unit 133a specifies the size of the respective marks 600 in the captured image to acquire the size information of the respective marks 600 (S1002d). Next, the highly-functional mark identifying unit 133a specifies the inclination angle of the respective marks 600 in the captured image to acquire the angle information of the respective marks 600 (S1002e). Next, the highly-functional mark identifying unit 133a combines the code information, the positional information, the size information, and the angle information together to create mark information (refer to FIG. 13) corresponding to the respective marks 600 (S1002f). Thereby, the mark identifying unit 133 acquires the mark information (refer to FIG. 13) corresponding to the respective marks 600 (S1002-a).
When the mark identifying unit 133 acquires the mark information corresponding to the respective marks 600, the mark information acquired by the mark identifying unit 133 (or surveillance processing unit 134) is recorded in the recording unit 125 corresponding to the respective marks 600 in response to this (S1003).

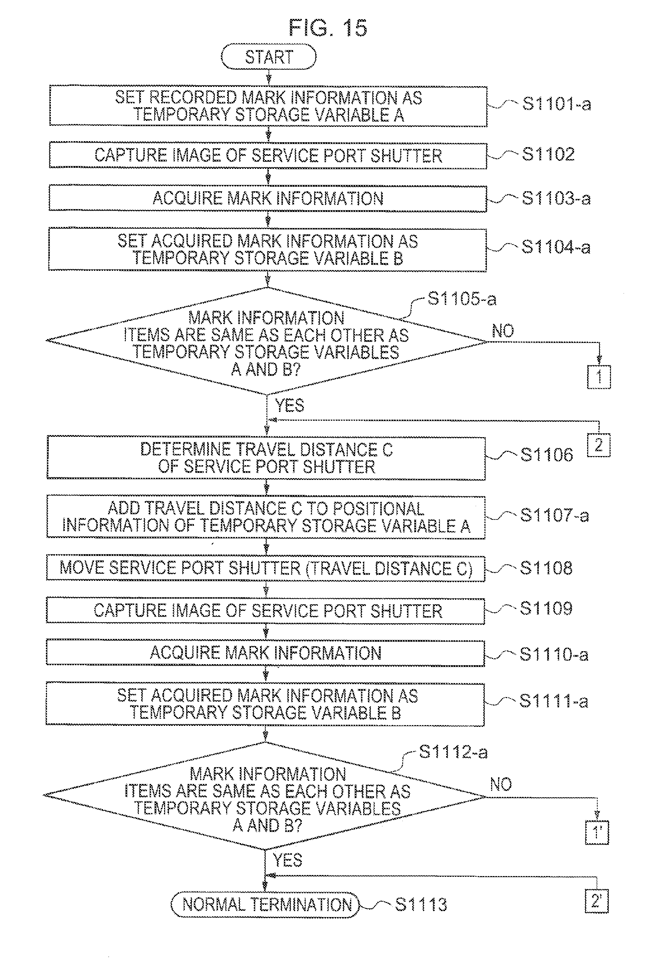

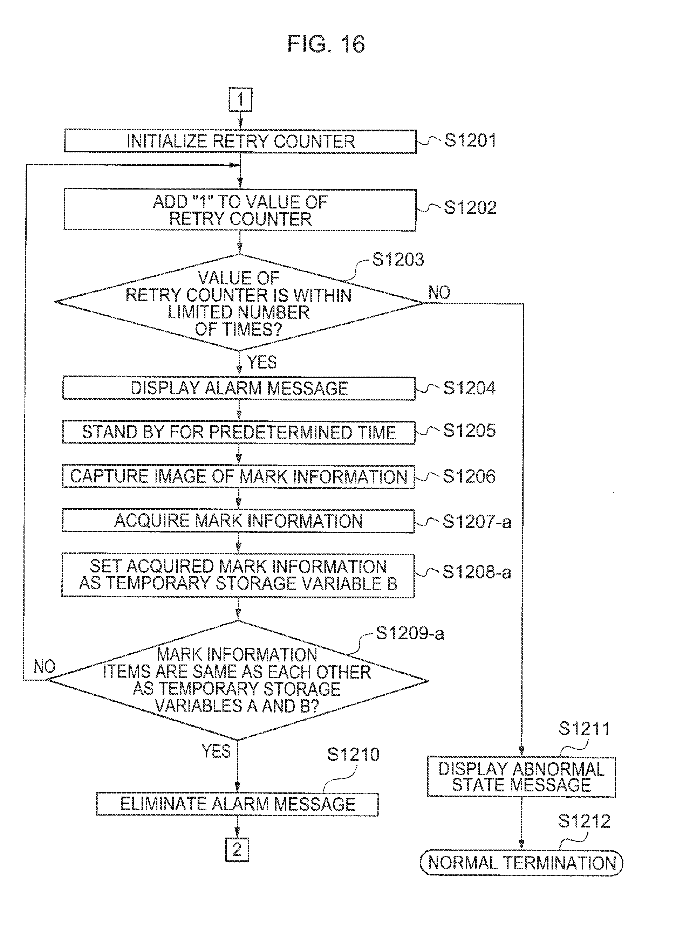

A processing process after the start of operation is shown in FIGS. 15 and 16. As shown in FIGS. 15 and 16, the operation of the automatic teller machine 100b of present embodiment 2 is different from the operation of the automatic teller machine 100a of Embodiment I in terms of steps designated with "-a".
In these steps designated with "-a", the automatic teller machine 100a of Embodiment 1 only handles the mark information corresponding to the single mark 600. However, the automatic teller machine 100b of present embodiment 2 handles the mark information corresponding to the plural marks 600.
Additionally, in these steps designated with "-a", the automatic teller machine 100a of Embodiment 1 only handles the code information and positional information of the mark 600. However, the automatic teller machine 100b of the present embodiment 2 handles the code information, positional information, size information, and angle information of the respective marks 600.

Accordingly, these steps designated with "-a" are as follows.
That is, in S1101-a, the surveillance processing unit 134 of the automatic teller machine 100b reads the recorded mark information corresponding to the respective marks 600 recorded in S1003 from the recording unit 125, and sets the recorded mark information corresponding to the respective marks 600 as the temporary storage variable A within the surveillance processing unit 134.
Additionally, in S1003-a, the highly-functional mark identifying unit 133a detects plural marks 600 from a captured image of a subject to be monitored (service port shutter 102) captured by the camera 124, thereby performing identification processing of the respective detected marks 600, and identifies the code information set in the respective marks 600 to acquire the code information of the respective marks 600. Additionally, the highly-functional mark identifying unit 133a specifies the position, size, and inclination angle of the respective marks 600 in the captured image to acquire the positional information, size information, and angle information of the respective marks 600. The highly-functional mark identifying unit 133a combines the code information, the positional information, the size information, and the angle information together to create mark information corresponding to the respective marks 600, Thereby, the high-functional mark identifying unit 133a acquires the mark information (acquired mark information) corresponding to the respective marks 600.
When the highly-functional mark identifying unit 133a acquires the mark information corresponding to the respective marks 600, the highly-functional mark identifying unit 133a (or surveillance processing unit 134) sets the acquired mark information as the temporary storage variable B within the surveillance processing unit 134 in response to this (S1104-a).
Then, the surveillance processing unit 134 compares the recorded mark information set as the temporary storage variable A with the acquired mark information set as the temporary storage variable B, and determines whether or not the mark information set as the temporary storage variable A and the mark information set as the temporary storage variable B are the same as each other (S1105-a), At this time, the surveillance processing unit 134 compares the code information, positional information, size information, and angle information in the recorded mark information and acquired mark information.
In addition, the processing of S1207-a to S1209-a is also the same as that of S1103-a to S1105-a.

In addition, the steps when the service port shutter 102 has been moved by the travel distance C among the steps designated with "-a" are as follows.
That is, in S1107-a, the surveillance processing unit 134 adds the travel distance C to the positional information of the recorded mark information set as the temporary storage variable A. Thereby, the recorded mark information set as the temporary storage variable A is updated by the mark information (recorded moved mark information) corresponding to the moved marks 600.
Thereafter, in S1110-a, the highly-functional mark identifying unit 133a detects plural marks 600 from a captured image of a subject to be monitored (service port shutter 102) captured by the camera 124 according to the aforementioned procedure, thereby acquiring the code information, the positional information, size information, and angle information of the respective marks 600, and combines the code information, the positional information, the size information, and the angle information together to create the moved mark information corresponding to the respective marks 600. Thereby, the high-functional mark identifying unit 133a acquires the moved mark information corresponding to the respective marks 600.
When the highly-functional mark identifying unit 133a acquires the moved mark information (acquired moved mark information) corresponding to the respective marks 600, the highly-functional mark identifying unit 133a (or surveillance processing unit 134) sets the acquired moved mark information as the temporary storage variable B within the surveillance processing unit 134 in response to this (S 1111-a).
Then, the surveillance processing unit 134 compares the recorded moved mark information set as the temporary storage variable A with the acquired moved mark information set as the temporary storage variable B, and determines whether or not the mark information set as the temporary storage variable A and the mark information set as the temporary storage variable B are the same as each other (S1112-a). At this time, the surveillance processing unit 134 compares the code information, positional information, size information, and angle information in the recorded moved mark information and the acquired moved mark information.

According to the automatic teller machine 100b related to such a present embodiment 2, plural marks 600 are provided, the code information, positional information, size information, and angle information of the marks 600 are acquired for each of the marks 600, and the subject to be monitored is surveilled on the basis of these kinds of information. Thereby, in addition to the same effects as the automatic teller machine 100a related to Embodiment 1, the detection precision of abnormality in the subject to be monitored can be further improved as compared to Embodiment 1. Hence, fraud in which a fake article is attached to the subject to be monitored can be more effectively prevented than in Embodiment 1.

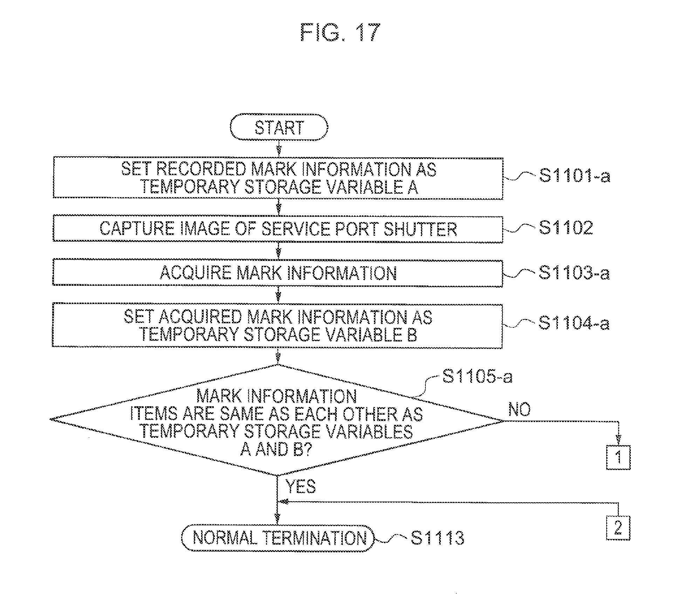

In addition, if the plural marks 600 are sufficiently complicated to the extent that the respective marks can be identified, forgery of the fake service port shutter 202 can be prevented by the configuration itself. Therefore, movement detection processing of the service port shutter 102 can also be excluded. Specifically, as shown in FIG. 17, the processing (i.e., the processing of S 1106 to S1112-a of FIG. 15) after a case in which the answer is "Yes" in the determination of S1105-a can also be excluded.

It should be understood that the invention is not limited to the aforementioned embodiments, but various changes or modifications can be made without departing from the spirit and scope of the invention.
For example, the case in which a user manipulates the automatic teller machines 100a and 100b to perform withdrawal processing has been in the aforementioned Embodiments 1 and 2. However, the surveillance processing unit 134 can immediately detect an abnormal state of the subject to be monitored (service port shutter 102) regardless of user's manipulation, if the processing shown in FIGS. 6 and 7 or FIGS. 15 and 16 is periodically performed using a timer (not shown). In this case, for example, the processing of S1204 and S1210 shown in FIGS. 7 and 16 can also be eliminated.
Additionally, for example, the mark 600 may be made invisible as long as the mark can be identified by a computer. Accordingly, the mark 600 can be formed, for example, in infrared reflective ink. In addition, in this case, an infrared camera is used as the camera 121. By configuring the automatic teller machines 100a and 100b in this way, the mark 600 provided in the subject to be monitored (service port shutter 102) can be concealed from an unauthorized person. Therefore, a risk that fraud is performed can be further reduced.
Additionally, for example, in the aforementioned examples, the mark 600 assumes a form of a two-dimensional bar code. However, the mark may be things other than the two-dimensional bar code, for example, the code information shown in FIG. 3B, a character unique to a financial institution, a manipulation guide message of an apparatus, or the like. By doing in this way, it is possible to make it hard for an unauthorized person to know that fraud is survailled by a mark. In addition, in a case in which the mark 600 assumes a form that may produce an error depending on the image capturing precision of the camera 124 as in this case, in the determination of S1105 or the like, an allowable error range may be set in advance, and the surveillance processing unit 134 may be determine whether coincidence is made within this allowable error range.
Additionally, for example, in the aforementioned examples, the mark 600 is provided in the service port shutter 102. However, in order to surveil against the fraud with respect to the display unit 105 or a card reader/writer 123, the mark may be provided in the display unit 105 or may be provided in a card slot of the card reader/writer 123.

### Industrial Applicability

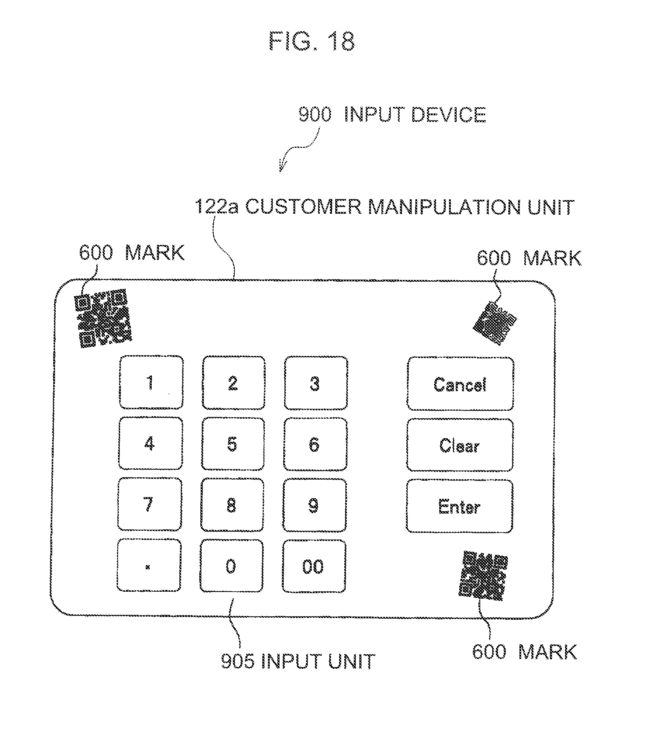

The fraud surveillance method of the invention is not limited to the automatic teller machines 100a and 100b, and can be used for apparatuses to which fake articles are possibly attached, for example, an input device to which a personal identification number is input (refer to FIG. 18). FIG. 18 is a view showing an example in which the fraud surveillance method of the invention is used for an input device 900. FIG. 18 shows the configuration of a customer manipulation unit 122a of the input device 900. In the example shown in FIG. 18, the mark 600 is provided in an input unit 905 of the customer manipulation unit 122a. In addition, for example, the input device 900 is configured such that the camera 124 is provided outside the input device 900, and the mark identifying unit 133 and the surveillance processing unit 134 are built in the input device 900. In such a configuration, in the input device 900, a camera 124 captures an image of the input unit 905 of the customer manipulation unit 122a, the mark identifying unit 133 acquires mark information 600 from the captured image of the input unit 905 captured by the camera 124, and the surveillance processing unit 134 detects a fake article (here, fake display input unit) on the basis of the mark information acquired by the mark identifying unit 133.

### Explanation of References

- 100 (100a, 100b):: AUTOMATIC TELLER MACHINE
- 101:: SERVICE PORT
- 102:: SERVICE PORT SHUTTER
- 103:: DENOMINATION CASSETTE
- 104:: TEMPORARY RETAINING UNIT
- 105:: SENSOR DETECTING UNIT
- 111:: MECHANISM CONTROL UNIT
- 121:: DISPLAY UNIT
- 122,122a:: CUSTOMER MANIPULATION UNIT
- 123:: CARD READER
- 124:: CAMERA
- 125:: RECORDING UNIT
- 131:: MAIN CONTROL UNIT
- 132:: IMAGE IDENTIFYING UNIT
- 133:: MARK IDENTIFYING UNIT
- 133a:: HIGHLY-FUNCTIONAL MARK IDENTIFYING UNIT
- 134:: SURVEILLANCE PROCESSING UNIT
- 600:: MARK (UNIQUE ID INFORMATION)
- 600a:: FIRST MARK
- 600b:: SECOND MARK
- 800:: HOST COMPUTER
- 900:: INPUT DEVICE
- 905:: NPUT UNIT

## Claims

1. A fraud surveillance method using a machine having a camera that captures an image of a subject to be monitored, an identifying unit that analyzes the image, a recording unit that stores various kinds of information, and a surveillance processing unit that surveils against fraud with respect to the subject to be monitored, the fraud surveillance method comprising:
a recording step in which the surveillance processing unit records, in the recording unit, code information set in unique ID information that is provided in advance in the subject to be monitored in an image-capturable state, and positional information representing a position at which the unique ID information is provided;
an image-capture step in which the camera captures an image of the subject to be monitored;
a code information acquisition step in which the identifying unit identifies the unique ID information from the captured image of the subject to be monitored that is captured in the image-capture step, and acquires the code information of the unique ID information;
a positional information acquisition step in which the identifying unit specifies the position at which the unique ID information is provided, and acquires the positional information of the unique ID information; and
a comparison step in which the surveillance processing unit regards the code information and the positional information of the unique ID information, both recorded in the recording unit in the recording step, as recorded code information and recorded positional information, regards the code information and the positional information of the unique ID information, both acquired in the code information acquisition step and the positional information acquisition step, as acquired code information and acquired positional information, compares the recorded code information with the acquired code information, and compares the recorded positional information with the acquired positional information, thereby determining whether or not fraud exists with respect to the subject to be monitored.

2. An automatic teller machine having a fraud surveillance function comprising:
a camera that captures an image of a subject to be monitored, the subject to be monitored being provided in advance with unique ID information in an image-capturable state;
a recording unit that records code information set in the unique ID information and positional information representing a position at which the unique ID information is provided;
an identifying unit that identifies the unique ID information from the captured image of the subject to be monitored that is captured by the camera and acquires the code information, and that specifies the position at which the unique ID information is provided and acquires the positional information; and
a surveillance processing unit that regards the code information and the positional information of the unique ID information, both recorded in the recording unit, as recorded code information and recorded positional information, regards the code information and the positional information of the unique ID information, both acquired by the identifying unit, as acquired code information and acquired positional information, compares the recorded code information with the acquired code information and compares the recorded positional information with the acquired positional information, thereby determining whether or not fraud exists with respect to the subject to be monitored.

3. The automatic teller machine having a fraud surveillance function according to Claim 2, wherein the subject to be monitored comprises a shutter of a service port for inputting cash into the machine or ejecting cash from the machine, and the unique ID information is provided on a surface of the shutter.

4. The automatic teller machine having a fraud surveillance function according to Claim 3, wherein:
the surveillance processing unit determines a travel distance of the shutter, adds a value of the travel distance to the recorded positional information, moves the shutter by the travel distance, causes the camera to capture an image of the moved shutter, and causes the identifying unit to acquire the code information and the positional information of the moved shutter from the captured image; and
the surveillance processing unit regards the recorded positional information to which a value of the travel distance has been added, as recorded moved positional information, regards the code information of the moved shutter as the acquired code information, regards the positional information of the moved shutter as the acquired moved positional information, compares the recorded code information with the acquired code information, and compares the recorded moved positional information with the acquired moved positional information, thereby determining whether or not fraud exists with respect to the subject to be monitored.

5. The automatic teller machine having a fraud surveillance function according to Claim 2, wherein the unique ID information is formed as a two-dimensional bar code.

6. The automatic teller machine having a fraud surveillance function according to Claim 2, wherein a plurality of the unique ID information is provided on a surface of the subject to be monitored.

7. The automatic teller machine having a fraud surveillance function according to Claim 2, wherein the unique ID information is provided so as to incline at a given inclined angle from a horizontal line and a vertical line drawn from a predetermined reference point.

8. The automatic teller machine having a fraud surveillance function according to Claim 2, wherein:
the recording unit records size information representing a size of the unique ID information and angle information representing an inclination angle of the unique ID information, in addition to the code information and the positional information of the unique ID information;
the identifying unit acquires the code information, the positional information, the size information, and the angle information of the unique ID information from the captured image of the subject to be monitored that is captured by the camera; and
the surveillance processing unit regards the size information and the angle information of the unique ID information, both recorded in the recording unit, as recorded size information and recorded angle information, regards the size information and the angle information of the unique ID information, both acquired by the identifying unit, as acquired size information and acquired angle information, compares the recorded size information with the acquired size information and compares the recorded angle information with the acquired angle information, in addition to the comparison of the recorded code information with the acquired code information and the comparison of the recorded positional information with the acquired positional information, thereby determining whether or not fraud exists with respect to the subject to be monitored.
